# FASCICULE DE BREVET EUROPEEN

(11) **EP 0 870 222 B1**
(45) Date de publication et mention de la délivrance du brevet: **02.05.2002**
(21) Numéro de dépôt: 96928498.3
(22) Date de dépôt: 08.08.1996
(51) Int. Cl.: G06F 1/00, G06F 3/033, G06F 3/02, G07F 7/10

(54) **DISPOSITIF ET PROCEDE D'ACCES CONDITIONNEL**
VERFAHREN UND VORRICHTUNG MIT BEDINGTEM ZUGANG
CONDITIONAL ACCESS METHOD AND DEVICE

(30) Priorité: 21.08.1995 FR 9509952; 03.11.1995 FR 9513038
(43) Date de publication de la demande: 14.10.1998
(73) Titulaire: Sirbu, Cornel, 78280 Guyancourt (FR)
(72) Inventeur: Sirbu, Cornel, 78280 Guyancourt (FR)
(74) Mandataire: Breese, Pierre
(86) Numéro de dépôt international: FR9601269
(87) Numéro de publication internationale: WO9707448

(56) Documents cités:
- EP-A- 0 413 822
- EP-A- 0 485 275
- EP-A- 0 566 811
- EP-A- 0 633 520
- WO-A-92/21082
- DE-A- 3 706 465
- DE-A- 4 236 908
- DE-A- 4 326 735
- FR-A- 2 401 459
- FR-A- 2 696 888
- FR-A- 2 713 033
- GB-A- 2 011 671
- US-A- 5 319 705
- HEWLETT-PACKARD JOURNAL, vol. 38, no. 6, Juin 1987, PALO ALTO, US, pages 8-12, XP002009393 R.R.STARR: "The Hewlett-Packard Human Interface Link"
- IBM TECHNICAL DISCLOSURE BULLETIN, vol. 38, no. 2, 1 Février 1995, page 463 XP000502542 "INTELLIGENT MOUSE"
- IBM TECHNICAL DISCLOSURE BULLETIN, vol. 28, no. 8, Janvier 1986, NEW YORK, US, pages 3671-3672, XP002009394 ANONYMOUS: "Supplementary Program Interface for Visual Display Unit"

## Description

### Domaine de l'invention

La présente invention concerne un dispositif d'accès conditionnel formé par un périphérique de pointage intégrant un ou plusieurs coupleurs pour les cartes à microcircuit.

Le dispositif est destiné à la mise en oeuvre de transactions sécurisées par cartes à microcircuit, à l'identification du porteur de carte, et/ou au contrôle des étapes des transactions.

Les applications concernent notamment l'accès conditionnel aux ressources de l'équipement hôte, à l'accès conditionnel de ressources disponibles sur un équipement extérieur auquel l'équipement hôte est relié ou connecté, la gestion de licences d'exploitation de logiciels mémorisés sur l'équipement hôte ou sur des équipements extérieurs auxquels l'équipement hôte est relié ou connecté, le paiement électronique, etc.

### Définitions

Par "carte à microcircuit" on entendra un support, généralement une carte, comportant un ou plusieurs circuits intégrés exécutant des fonctions de traitement et/ou de mémorisation, par exemple une carte à mémoire ou carte à microprocesseur communément appelée "cartes à puce", une carte sans contact ou une carte PCMCIA.

Par "coupleur de carte à microcircuit", on entendra tout moyen mettant en oeuvre une interface pour l'échange de signaux entre un matériel et la carte à microcircuit, selon des protocoles de communications standardisés ou spécifiques. L'échange de signaux peut être réalisé par une connexion électrique ou une liaison sans fil, par exemple électromagnétique, ou lumineuse.

Par "équipement hôte", on entend un terminal d'ordinateur, une station de travail, un ordinateur personnel, un terminal multimédia, etc. et particulièrement, mais non exclusivement, tout équipement susvisé comportant des moyens de connexion bidirectionnelle temporaire ou permanente à un réseau de communication local ou publique.

Par "périphérique de pointage", on entendra un dispositif actionné manuellement par son utilisateur pour agir sur des objets visuels, destiné à être utilisé avec un équipement hôte interactif comportant un écran et une interface utilisateur graphique comprenant les objets visuels, tels qu'une souris opto-mécanique à bille, une souris optique nécessitant un tapis spécial, une boule ou track-ball, un numériseur à stylet ou à curseur, un pointeur tactile, un manche ou joystick, une télécommande à levier pour CD-I.

### Etat de la technique

Ces périphériques fonctionnent conjointement avec l'équipement qu'ils contrôlent et auquel ils sont connectés par l'intermédiaire d'un port de communication, par exemple un port RS232, USB ou équivalent, ou encore reliés par un moyen de transmission sans fil, par exemple par liaison infrarouge ou hertzienne. Dans certains cas, notamment lorsque l'équipement hôte est un ordinateur portable, ces périphériques sont intégrés dans ce dernier, bien qu'ils forment un équipement autonome.

Il s'agit généralement de dispositifs facilement interchangeables en raison de l'adoption par la plupart des constructeurs d'équipements hôtes de standards communs. Ces périphériques sont également des dispositifs d'un prix relativement faible par rapport au prix de l'équipement hôte. Ils peuvent donc être remplacés de façon indépendante de l'équipement hôte par un dispositif similaire sans inconvénient.

On a proposé dans l'état de la technique d'intégrer dans certains périphériques de pointage-un connecteur de carte à microcircuit, par exemple dans les brevets européen EP485275. ou allemand DE4326735. Le périphérique décrit dans la demande de brevet européen EP485275 comporte un connecteur de carte à microcircuit directement relié aux conducteurs communs entre l'ordinateur et le périphérique, afin de permettre à la fois l'échange de signaux relatifs aux fonctions de pointage, et l'échange de signaux pour l'exploitation des fonctions de sécurité associées à la carte à microcircuit. Le périphérique se comporte de manière transparente entre la carte à microcircuit et l'ordinateur auquel il est connecté. Aucun traitement ne se fait au sein du périphérique, qui se contente d'assurer la liaison électrique entre la carte à microcircuit et l'ordinateur. L'ensemble du processus de saisie du code d'identification personnel se fait donc dans l'équipement hôte, ce qui n'est pas satisfaisant et constitue un inconvénient majeur pour le développement commercial des réseaux publiques tels qu'INTERNET.

Le document EP-A-0 633 520 décrit un dispositif de pointage incorporant un coupleur de carte à puce sur laquelle est enregisté un code identificateur de l'utilisateur et des moyens d'acquisition de données (un clavier, microphone), le dispositif de pointage étant couplé à un équipement électronique hôte.

### Problème objectif de l'état de la technique

En effet, les équipements hôtes sont aujourd'hui presque toujours reliés à au moins un réseau, soit interne à une organisation, soit publique, par exemple par INTERNET. Il est donc possible, voire facile, pour un tiers, de se connecter à l'équipement hôte et de prendre connaissance des informations traitées par ce dernier. Il existe bien des solutions techniques pour filtrer les informations accessibles par des tiers extérieurs, mais ces solutions sont en contradictions avec la volonté d'ouverture et d'augmentation du niveau de communication de la plupart des utilisateurs, et impose, pour un fonctionnement optimal, des arbitrages complexes et généralement hors de portée de l'utilisateur moyen.

### Exposé de l'invention

L'objet de l'invention est de remédier à ces inconvénients en proposant un dispositif d'accès conditionnel augmentant sensiblement le niveau de sécurité contre des intrusions abusives par des tiers tentant de se procurer le code ou la clé d'accès associées à la carte à microcircuit en se connectant à l'équipement hôte par un réseau publique ou interne. A aucun moment, une intrusion dans les mémoires de l'ordinateur ne permettra d'accéder aux données relatives à la certification de l'utilisateur.

A cet effet, l'invention réside dans le fait que l'exploitation de la carte à microcircuit se fait localement, c'est-à-dire dans le périphérique de pointage et non pas dans l'équipement hôte. Cette caractéristique est essentielle. Elle assure un cloisonnement entre les moyens d'identification de l'utilisateur d'une part, et l'ordinateur et le réseau de communication auquel il est ou peut être raccordé d'autre part.

Un premier aspect de l'invention est un dispositif tel que revendiqué dans la revendication indépendante 1. Un procédé selon l'invention est spécifiée dans la revendication indépendante 18. Divers modes de réalisation de l'invention sont spécifiés dans les revendications dépendantes.

Les moyens d'identification de l'utilisateur sont réunis dans le périphérique de pointage auquel seul l'utilisateur à accès. Il saisit les données personnelles en principe secrètes, par exemple son code confidentiel. Ces données sont vérifiées par un microcalculateur local avec les informations enregistrées par la carte. Ce microcalculateur est généralement intégré dans la carte à microcircuit, mais peut également être intégré dans le périphérique. Cette vérification n'entraîne dans les dispositifs et procédés selon l'invention aucune transmission de données secrètes vers l'ordinateur. La comparaison se traduit par une information d'agrément ou non de l'utilisateur, qui constitue la seule information transmise à l'ordinateur. Ceci est essentiel pour éviter l'accessibilité d'informations confidentielles telles que le code à un tiers relié à l'ordinateur par l'intermédiaire d'un réseau local ou un réseau téléphonique.

### Caractéristiques additionnelles de l'invention

L'invention est avantageusement complétée par les différentes caractéristiques suivantes :
- il comporte un capteur pour la saisie d'un signal d'identification biométrique, tel qu'un capteur d'images d'empreintes digitales et/ou un capteur d'images de fond de l'oeil et/ou un capteur de reconnaissance vocale ;
- il comporte des moyens de contrôle vocal d'une transaction ;
- le clavier et/ou l'écran est (sont) disposé(s) sur la face supérieure de la souris et en ce qu'un couvercle est articulé sur le boîtier de la souris pour, en position fermée, protéger ledit clavier et/ou ledit écran lorsque le coupleur de carte à puce n'est pas utilisé ;
- une fente d'introduction d'une carte à puce est prévue au niveau d'une rainure que présente la souris sur son pourtour dans le prolongement de l'espace entre des touches d'actionnement et un corps du boîtier de ladite souris sur lequel lesdites touches sont montées ;
- dans le cas où le périphérique comporte un capteur d'images d'empreintes digitales, son boîtier présente un guide destiné à recevoir un doigt de l'opérateur, par exemple son pouce ;
- le dispositif comporte une horloge à alimentation permanente permettant de dater les opérations, notamment les opérations financières ;
- il comporte au moins deux entrées de cartes à puce ;
- il comporte des moyens pour la gestion et l'exécution d'au moins une application de sécurité associée à un logiciel applicatif de l'équipement hôte ;
- il comporte des moyens permettant le transfert d'une application de sécurité entre des moyens de stockage, gestion et exécution d'une application de sécurité et une carte à microcircuit comportant une application de distribution de ces applications de sécurité ;
- il constitue un presse-papiers à stylet et à double coupleur de carte à puce et comporte des moyens pour saisir, compresser et enregistrer des informations manuscrites et les décharger ultérieurement dans l'équipement hôte ;
- il constitue un assistant personnel multimédia et/ou incorpore des moyens mettant en oeuvre d'une ou plusieurs applications bureautiques telles qu'une calculatrice, un agenda, une horloge, etc. ;
- il comporte une horloge à fonctionnement permanent et des moyens pour transmettre à l'équipement périphérique des données numériques datées comportant une séquence de données relative à l'autorisation calculée à partir des données mémorisées dans la carte à microcircuit et des données saisies par l'utilisateur et une séquence de données délivrée par l'horloge.

L'invention concerne également un procédé pour la gestion et l'exécution d'application de sécurité dans l'équipement hôte consistant à procéder à la comparaison dans un périphérique relié à un équipement hôte de données personnelles et de données enregistrées dans une carte à microcircuit sans que les données personnelles ne soient transmises à l'équipement hôte, le périphérique intégrant des moyens d'acquisition des données personnelles et au moins un connecteur de carte à microcircuit.

Suivant un mode de mise en oeuvre avantageux, le procédé comprend un protocole de communication étendu du protocole de communication spécifique aux moyens de pointage du dispositif périphérique. Ce protocole permet l'utilisation d'un seul port série pour la communication entre des logiciels applicatifs et les moyens de pointage et les moyens sécurisés réunis dans le dispositif selon l'invention.

Ainsi, selon une forme avantageuse de ce protocole, les données et les commandes sont transmise sous la forme de trames comprenant un ensemble de champs constitué chacun d'une séquence codée comportant un nombre prédéterminé de bits, chaque trame comprenant un champ d'identification et au moins un des champs suivants :
- champ de l'information de pointage,
- champ de l'information relative aux moyens sécurisés.

Le champ l'information relative aux moyens sécurisés comporte obligatoirement un champ de contrôle qui précise le type d'information suivi des champs optionnels donnant la longueur du message d'application de sécurité, et un champ de contrôle d'intégrité dudit message.

Avantageusement, le procédé fournit l'information de pointage à un logiciel applicatif et en même temps assure la transmission des messages vers le même ou un autre logiciel applicatif simultanément actif et son application de sécurité.

De préférence, l'appareil transmet les messages émis par les moyens sécurisés sous la forme de trames dont le premier champ est la trame spécifique de pointage modifié suivie dudit message complet ou répartit sur plusieurs trames du même type. Aussi, les trames de pointage et les trames étendues peuvent être alternées.

Selon une variante, les moyens sécurisés de stockage et d'exécution desdites applications de sécurité sont regroupés dans une carte à microcircuit miniature amovible. Ainsi, la gestion et la disponibilité desdits moyens de stockage et exécution des applications de sécurité sont rendues indépendantes de la maintenance du dispositif.

### Présentation des dessins annexés

L'invention sera mieux comprise à la lecture de l'exposé détaillé suivant, donné à titre d'exemple non limitatif et illustré par les figures annexées :
- la figure 1 est une représentation en vue de dessous (côté bille) d'un dispositif d'accès conditionnel conforme à une réalisation possible de l'invention dans sa version "souris" ;
- les figures 2a et 2b sont des représentations en vue en perspective de deux variantes de réalisation possibles pour la souris de la figure 1 ;
- la figure 2c représente une vue d'un écran pour la mise en oeuvre d'une variante de réalisation ;
- la figure 3 est une représentation schématique illustrant une configuration avantageuse possible à l'intérieur du boîtier de la souris de la figure 1 ;
- la figure 4 est une vue de dessus d'un dispositif d'accès conditionnel de type souris à bille conforme à une autre variante de réalisation possible pour l'invention ;
- la figure 5 est une vue en perspective illustrant un mode de réalisation possible pour la variante de la figure 4 ;
- la figure 6 est une représentation schématique en vue de côté illustrant un mode de réalisation possible pour la variante de la figure 4 ;
- la figure 7 est un synoptique illustrant un dispositif d'accès conditionnel avec contrôle biométrique ;
- la figure 8 est une vue de dessus d'un dispositif d'accès conditionnel avec contrôle biométrique ;
- la figure 9 est une représentation schématique en perspective avec arraché d'un clavier de micro-ordinateur avec un dispositif tactile de pointage selon l'invention ;
- la figure 10 est un organigramme illustrant une séquence d'interrogation possible par un logiciel applicatif, d'une application de sécurité portée par une carte collectrice insérée dans un dispositif d'accès conditionnel conforme à un mode de réalisation possible pour l'invention ;
- les figures 11 et 12 sont des organigrammes illustrant des séquences d'installation et de désinstallation d'une application de sécurité sur une carte collectrice insérée dans un dispositif d'accès conditionnel selon un mode de réalisation possible pour l'invention ;
- les figures 13 à 18 illustrent la structure des trames de communication utilisées avec un dispositif d'accès conditionnel conforme à un mode de réalisation possible de l'invention.

### Exposé détaillé de différents exemples non limitatifs de réalisation de l'invention

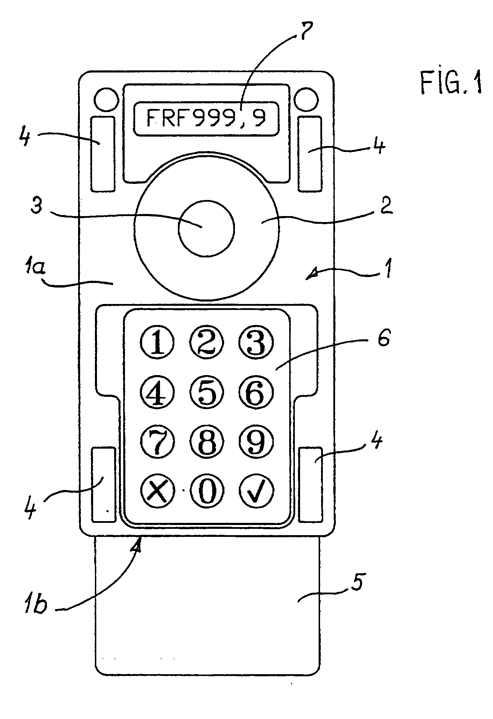

L'appareil selon l'invention sera décrit sous forme d'une souris à bille, la même démarche s'appliquant pour les autres types de dispositifs de pointage. La figure 1 montre un appareil selon l'invention dérivé d'une souris opto-mécanique dont la bille (3) est retenue dans sa cage par le couvercle (2). Un clavier (6) est logé dans un dégagement prévu sur le corps inférieur (1) de la souris. La profondeur de ce dégagement est choisie en fonction de l'épaisseur du clavier et de l'épaisseur des pastilles glissantes (4) afin que l'ensemble ne touche pas la surface d'appui entraînant la bille (3).

L'appareil représenté dans la figure 1 comporte un coupleur de carte à microcircuit. Dans la figure 1, une carte à microcircuit (5), par exemple conforme à la norme ISO 7816 ou encore une carte sans contact, est introduite dans l'appareil par une fente latérale prévue en ce sens. L'appareil peut comporter des moyens pour accepter les deux types de carte à microcircuit, pour identifier le type de carte et vérifier son insertion correcte.

Ainsi, le clavier (6) peut être placé sur le couvercle supérieur de la souris, protégé ou non par un cache articulé. Ce dispositif peut comporter un afficheur (7) à cristaux liquides pour le contrôle des transactions et opérations et il est connecté à l'équipement hôte par un cordon de liaison muni d'une prise pour le branchement sur le port ad-hoc de l'équipement hôte. L'alimentation du dispositif est fournie soit par une source autonome soit par l'équipement hôte. L'alimentation électrique peut être réalisée soit par une alimentation indépendante propre au périphérique, ou dans la plupart des cas, par la tension disponible sur le port (RS232, USB, GEOPORT, ...) auquel est relié le périphérique, ou un second port (clavier, ...).

L'appareil peut comporter une horloge à alimentation permanente nécessaire pour dater des transactions financières. L'appareil peut comporter aussi des moyens sécurisés habilités à recevoir une application porte-monnaie électronique. Ainsi il peut recevoir et conserver l'argent ou la valeur électronique. Lesdits moyens peuvent être réalisés soit avec un microcontrôleur en version sécurisé et comprenant une application porte-monnaie électronique, soit en utilisant un second coupleur de carte à microcircuit comportant une application porte-monnaie électronique. Cette deuxième carte porte-monnaie électronique est de préférence une carte miniature à contacts (5a) et logée à l'intérieur du dispositif (par exemple de format GSM, 15 x 25 mm). Ceci facilite son remplacement en cas d'expiration de validité ou de défaillance. Cette fonction financière intrinsèque correspond à un portefeuille électronique.

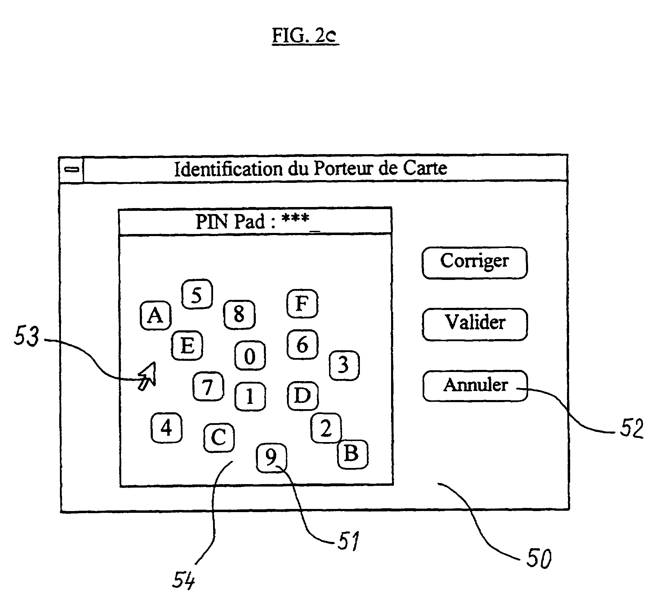

Une variante représentée en figure 2c consiste à remplacer le clavier de saisie des données personnelles par un équivalent informatique. Cet équivalent est constitué par un programme provoquant l'affichage sur l'écran (50) de l'équipement hôte d'une représentation graphique d'un clavier virtuel (54) composé de touches virtuelles (51, 52). Les touches virtuelles (51) de ce clavier sont positionnées de façon aléatoire et différente à chaque nouvelle activation de ce programme. La saisie des données personnelles s'effectue à l'aide des fonctions de pointage du dispositif d'accès conditionnel selon l'invention. L'exploitation des signaux de positionnement et de validation de la position de l'index (53) sur le clavier virtuel (54) se fait exclusivement dans le périphérique, d'une manière empêchant la transmission des données de position validées à l'équipement hôte.

Plusieurs configurations ergonomiques sont possibles pour le boîtier (1) de la souris.

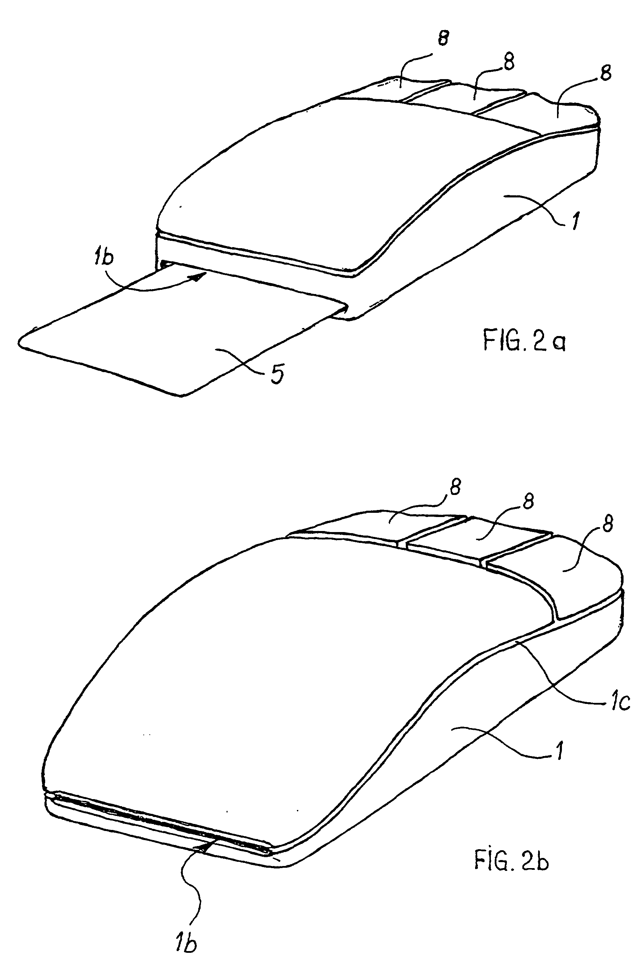

On a illustré sur les figures 2a et 2b deux configurations différentes envisageables.

Dans les deux cas, la fente (1b) est ménagée sur le bord du boîtier (1) le plus éloigné des touches d'actionnement de la souris, ces touches ayant été référencées par (8) sur ces figures 2a et 2b.

La configuration illustrée sur la figure 2b est avantageuse car elle permet de simplifier l'outillage de fabrication. La fente (1b) y est située au niveau de la rainure (1c) que présente habituellement une souris sur son pourtour dans le prolongement de l'espace entre ses touches d'actionnement (8) et le corps du boîtier (1).

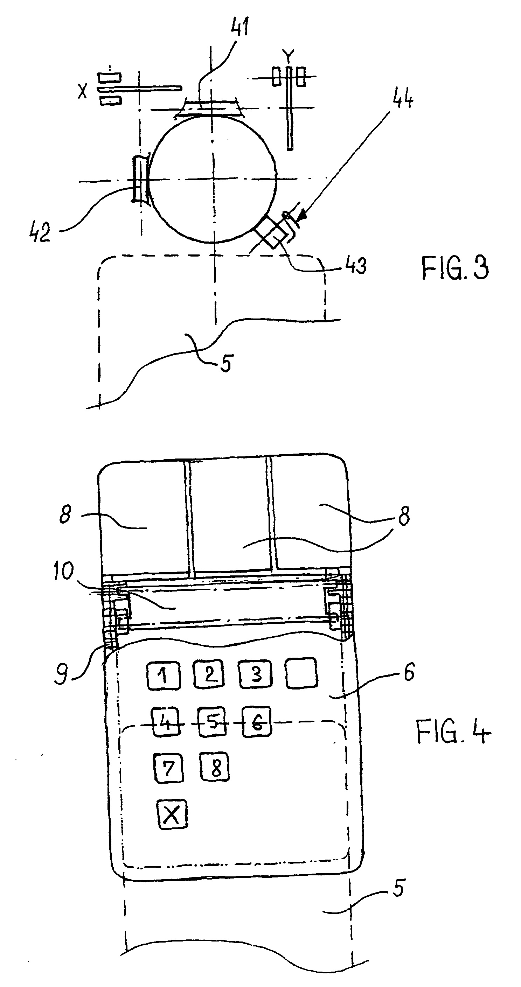

La figure 3 illustre une configuration avantageuse à l'intérieur du boîtier (1). On sait que classiquement, il est prévu dans un boîtier de souris à bille deux axes encodeurs (41, 42) et un galet presseur (43) en contact permanent avec la bille (3). Ces axes encodeurs (41, 42) permettent de suivre les déplacements de la bille. Le ressort qui maintient le galet (43) en contact avec la bille (3) est un ressort (44) en spirale, ce qui permet de réduire l'encombrement du mécanisme de pression à l'intérieur, et donc de libérer un volume au niveau de la zone d'introduction de la carte à puce (5).

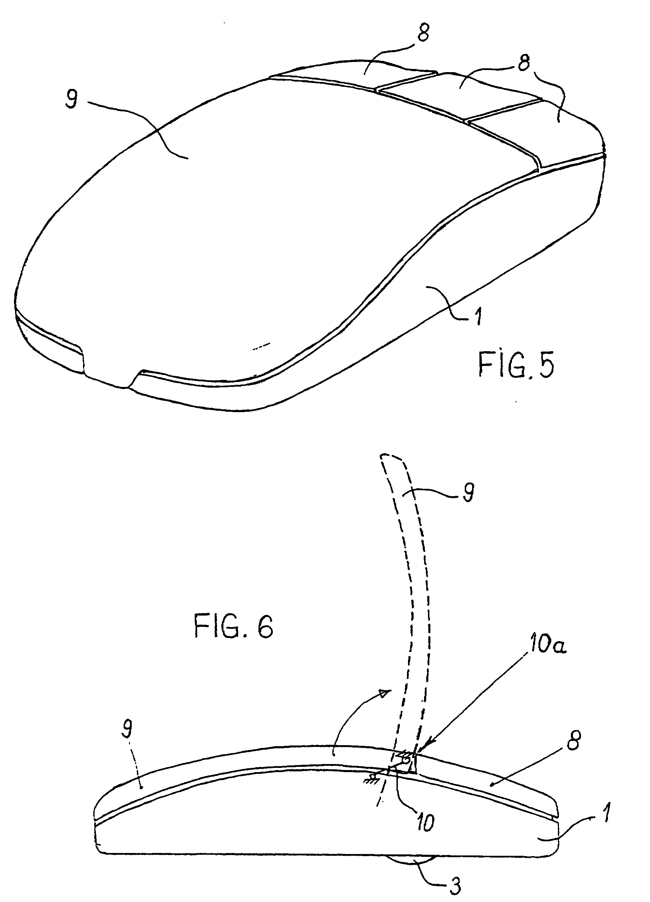

Dans une autre variante de souris à bille conforme à l'invention illustrée par les figures 4 à 6, le clavier (6) est disposé sur la face supérieure de la souris, c'est-à-dire sur la face qui est opposée au fond (1b). Un couvercle articulé (9) permet de protéger le clavier lorsque la fonction de coupleur de carte à puce n'est pas utilisée. Ce couvercle (9) est représenté arraché sur la figure 4. Il présente une forme telle que sa face supérieure prolonge très exactement la forme du boîtier lorsqu'il est en position fermée, le périphérique se présentant alors comme une souris classique.

Ce couvercle (9) est articulé sur le boîtier (1) par l'intermédiaire d'un bras (10) par rapport auquel il est monté pivotant, ledit bras (10) étant lui-même monté pivotant, par rapport au boîtier (1) autour d'un axe parallèle à l'axe de pivotement du couvercle (9) sur ledit bras (10).

Une butée (10a) est prévue sur le boîtier (1) pour limiter le débattement du couvercle (9). On dispose ainsi d'une articulation qui permet à l'opérateur de dégager totalement le couvercle (9) par rapport à la zone occupée par le clavier (6), pour libérer l'accès de celui-ci, tout en conservant au périphérique un aspect compact.

Dans le cas d'une application à des transactions financières sur des réseaux en ligne et/ou en mode local, l'actionnement du clavier du périphérique par l'opérateur peut permettre les différentes opérations suivantes :
- Validation,
- Correction, effacement de la dernière entrée numérique,
- Journal, lecture de la liste des dernières transactions,
- Balance, lecture de la somme ou valeur restant dans la carte porte-monnaie électronique,
- Sélect, sélection de devise pour un porte-monnaie électronique intersectoriel,
- Annulation, abandonner la transaction courante,
- Local, arrêter la communication avec l'équipement hôte,
- Verrouiller, une carte à puce,
- EW/Carte, sélection portefeuille (EW) ou carte insérée, si applicable,
- Transfert, lancer une opération de transfert.

L'appareil attaché à un équipement hôte comportant des moyens logiciels adéquats et connecté à un réseau télématique, permet le paiement sécurisé en ligne des biens et services par cartes à puce bancaires et cartes porte-monnaie électronique, mais aussi le transfert sécurisé d'argent entre deux objets financiers distants.

Par exemple, deux personnes situées dans des localités différentes, possédant chacune un ordinateur personnel avec modem appareil selon l'invention peuvent exécuter les transactions sécurisées suivantes :
- transférer une somme d'argent de la carte bancaire de la première personne sur la carte porte-monnaie électronique de l'autre personne ;
- choisir la devise qui fera l'objet du transfert ;
- transférer une somme d'argent d'une carte porte-monnaie électronique à l'autre.
- Aussi, chacune des deux personnes peut utiliser les services financiers en ligne offerts par sa banque pour les cartes porte-monnaie électronique :

- transférer de l'argent de son compte courant sur une carte porte-monnaie électronique et réciproquement ;
- changer une somme d'argent en devise et réciproquement.

Chaque fois que l'identification du porteur de la carte est exigée, le code personnel ou la signature servant d'identificateur, sont saisis au niveau du dispositif qui crée ainsi une barrière à la fraude informatique.

L'appareil comportant de plus les moyens pour utiliser les cartes porte-monnaie électronique permet les opérations suivante :
- vérifier la valeur restante ou la balance ;
- la lecture du journal des transactions ;
- verrouiller son porte-monnaie électronique.

Une carte à puce 5 peut comporter plusieurs applications financières, par exemple une CB et au moins un porte-monnaie électronique. Tout appareil de base selon l'invention comporte les moyens pour effectuer des transactions entre les applications financières résidentes sur une même carte à puce, les conditions de sécurité étant assurées implicitement par la carte même.

L'appareil comportant soit un portefeuille électronique (EW) interne, soit deux coupleurs identiques dont un comprenant une carte porte-monnaie électronique ayant rôle d'intermédiaire, peut être utilisé en mode local de fonctionnement pour des transactions carte à carte, les cartes insérées successivement dans le connecteur disponible :
- débiter une carte bancaire et charger un porte-monnaie électronique ;
- transférer de l'argent d'un porte-monnaie électronique à un autre ;
- conserver de l'argent dans le portefeuille EW ;
- annuler la dernière transaction.

On remarquera que les moyens mettant en oeuvre l'identification du porteur de la carte (saisie de code personnel ou signature), les moyens coupleurs de carte à puce et les moyens de pointage (sélection, validation, modification) définissent la configuration de base pour chacun des types d'appareil décrits ci-dessus. Partant de chaque configuration de base ci-dessus, en combinant les différents moyens de communication série avec l'équipement hôte, claviers, affichages, alimentations, horloge, portefeuille électronique, on obtient des familles d'appareils selon l'invention.

Un appareil périphérique du type de celui qui vient d'être décrit apporte à un ordinateur personnel ou une télévision interactive les fonctions d'un terminal pour cartes à puce utilisables dans des applications financières, contrôle d'accès, identification et péage.

Il permet le paiement des biens et services sur les réseaux en ligne avec des cartes à puce bancaire (CB) ou porte-monnaie électronique ainsi que des fonctions de banque à domicile. En versions à portefeuille électronique (EW), l'appareil même peut servir comme réserve d'argent pour le paiement sur les réseaux en ligne ou en mode local.

L'appareil permet l'utilisation des moyens de paiement personnalisés (CB, porte-monnaie électronique, WE) ou anonymes (porte-monnaie électronique, WE). Ainsi, l'appareil permet la manipulation de l'argent électronique en tant que remplacement direct de l'argent physique et efface les barrières de la distance physique entre les opérateurs.

L'appareil peut aussi servir pour l'administration des réseaux d'entreprise, accès sécurisé aux ordinateurs, protection logicielle.

L'appareil remplace la souris habituelle ou tout autre dispositif série de pointage et il est accompagné d'un pilote logiciel adéquat à chaque type d'équipement hôte. Généralement, l'appareil est une télécommande destinée aux terminaux multimédia le reconnaissant comme dispositif de pointage (ordinateurs personnels, télévisions multimédia interactives, etc.). Il peut aussi comporter des applications additionnelles comme calculatrice financière, presse-papiers, agenda, etc.

Décliné sous la forme d'un presse-papiers à stylet et à double interface de carte à puce qui en option enregistre des fiches manuscrites compressées dans une mémoire, l'appareil pourra également avantageusement être utilisé par des professionnels de santé.

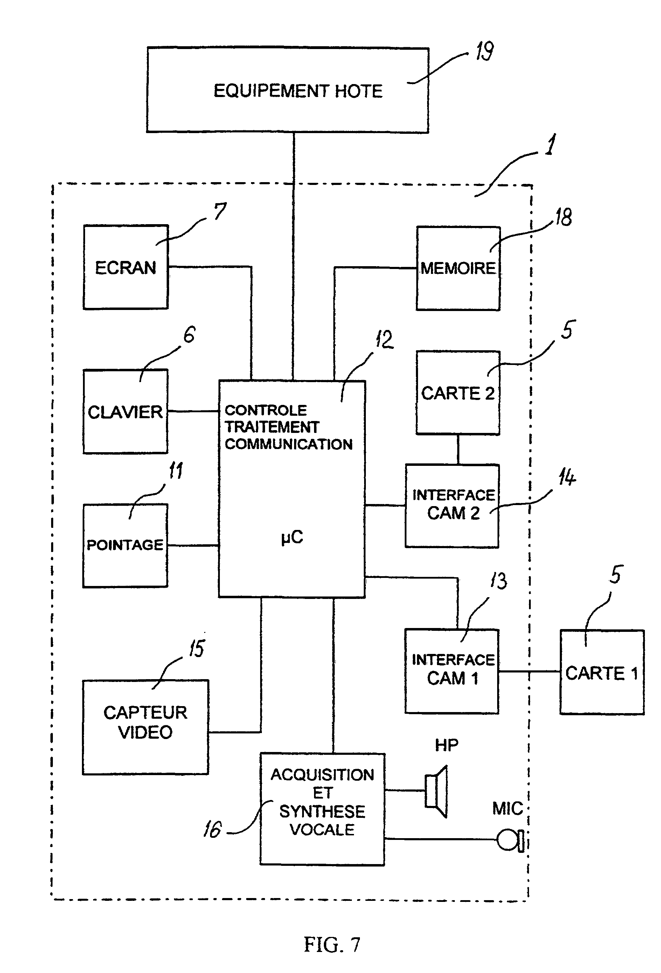

On a illustré sur la figure 7 une configuration pour la mise en oeuvre d'un contrôle biométrique, par exemple par un contrôle au moyen d'un scanner d'empreintes digitales ou d'un scanner de fond de l'oeil, comportant un capteur d'images (15), qui est par exemple un scanner d'empreintes digitales ou un scanner de fond de l'oeil, est relié au microcontrôleur du périphérique (13) sur cette figure 7. Ce microcontrôleur (13) est également relié aux moyens spécifiques de pointage (11), à l'écran d'affichage (7), ainsi qu'au clavier (6).

Le microcontrôleur (12) regroupe les moyens de contrôles de traitement et de communication de l'ensemble du dispositif. Ainsi il communique avec une carte à puce externe (5) par le biais de l'interface (13) et avec la carte à puce interne (5) par le biais de l'interface (14) et d'autre part avec le micro-ordinateur (19), auquel ledit périphérique est associé.

En variante encore, le microcontrôleur (12) est également avantageusement relié à un processeur de synthèse et de reconnaissance vocale (16) qui est par exemple lui-même relié à un microphone MIC et à un haut-parleur HP disposé dans le boîtier (1). Une variante de mise en oeuvre consiste à vérifier le signature vocale de l'utilisateur au moment de la lecture d'informations affichées sur un écran du périphérique ou de l'équipement hôte. Ce mode de réalisation permet d'effectuer la reconnaissance vocale et la comparaison avec la signature vocale numérisée enregistrée dans une carte à microcircuit (5) à partir d'un nombre très réduit de mots, et d'utiliser des algorithmes et circuits intégrés simplifiés et peu coûteux sans réduire de façon significative la sécurité de la comparaison.

Les moyens de traitement que constitue l'unité (12) mettent en forme l'objet biométrique relevé par le capteur (15) et/ou l'unité de reconnaissance vocale (16), pour permettre son traitement par une carte (5). Celle-ci reçoit et compare l'objet biométrique avec la référence qu'elle présente en mémoire. En variante, la comparaison entre la référence et l'objet biométrique relevé par le capteur (15) ou l'unité (16) peut être réalisée par le microcontrôleur (12).

On observera que les moyens de traitement que constitue microcontrôleur (12) peuvent être un coprocesseur mathématique optimisé pour le traitement des signaux et/ou les calculs cryptographiques. Aussi, tout ou partie de l'unité (16) peut être avantageusement intégré sur une même puce ou module (12).

L'objet biométrique, tel que l'image relevée par le capteur (15) ou la reconnaissance vocale que réalise l'unité (16), se substitue au code d'identification de l'utilisateur, qui n'a pas besoin d'entrer un code sur le clavier (6).

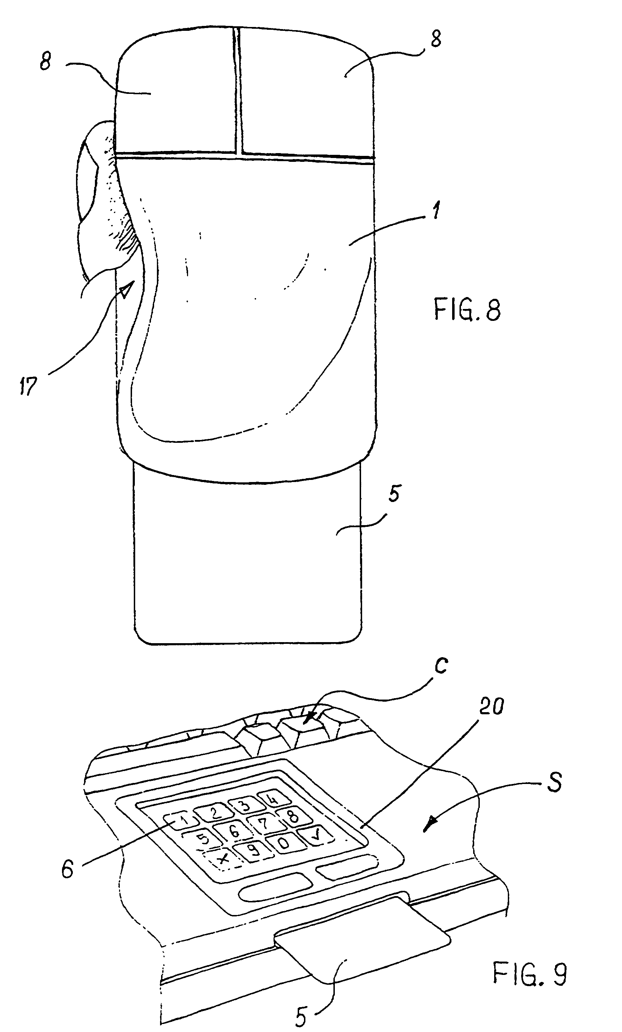

La figure 8 représente une configuration où le capteur (15) est situé sur un bord latéral du boîtier (1) de la souris. Ce bord présente un guide (17) destiné à recevoir un doigt de l'opérateur, par exemple son pouce. Le projet de norme européenne EN 1546 présente en détail le fonctionnement et l'utilisation des cartes porte-monnaie électronique. Le projet de norme européenne EMV décrit en détail le standard des procédés de paiement par cartes à microcircuit ainsi que les caractéristiques de telles cartes.

Le périphérique peut comporter des moyens de communication série sans fil pour augmenter sa mobilité par rapport à l'équipement hôte. Des moyens radio ou infrarouge peuvent être utilisés pour satisfaire les contraintes environnementales et celles des équipements hôtes ciblés.

Le périphérique peut encore être intégré au micro-ordinateur lui-même. Une variante en ce sens a été illustrée sur la figure 9. Dans cette variante, un micro-ordinateur présente un dispositif tactile de pointage (20). Un clavier (6) indépendant du clavier C de l'ordinateur est intégré au support S sur lequel clavier C et le dispositif tactile de pointage (20) sont montés.

Avantageusement, la surface tactile du dispositif (20) est également utilisée pour réaliser le clavier (6) de saisie des informations personnelles, une représentation dudit clavier étant superposée à ladite surface tactile. Cette représentation peut être visible en permanence. En variante, elle peut être visible seulement lors de l'opération d'identification du porteur, par exemple par un rétro-éclairage réalisé au moyen d'un film électroluminescent.

Une autre variante de réalisation d'un dispositif selon l'invention, met en oeuvre des moyens de synthèse vocale et un dictionnaire adéquat. Ce dictionnaire peut être téléchargé et/ou modifié par une procédure sécurisée à partir d'un serveur accrédité. Ce serveur peut être par exemple celui du fabricant du dispositif d'accès conditionnel. Ce dernier peut, avec des moyens de reconnaissance vocale, apprendre un minimum de commandes requises par le déroulement des transactions, tels que par exemple : accepter, annuler, continuer. A titre d'exemple, pour le contrôle du prix affiché sur l'écran de l'ordinateur de 198,25 $, le procédé consiste à transmettre l'information relative au prix périphérique qui transforme cette information par ses moyens de synthèse et reproduction vocale, pour émettre les sons "un", "neuf", "huit", "virgule", "deux", "cinq" et "dollars".

Ensuite le dispositif valide le prix pour la transaction par exemple à la commande "accepter" prononcée oralement par le titulaire de la carte à microcircuit introduite dans le dispositif. Les commandes vocales peuvent être enregistrées.

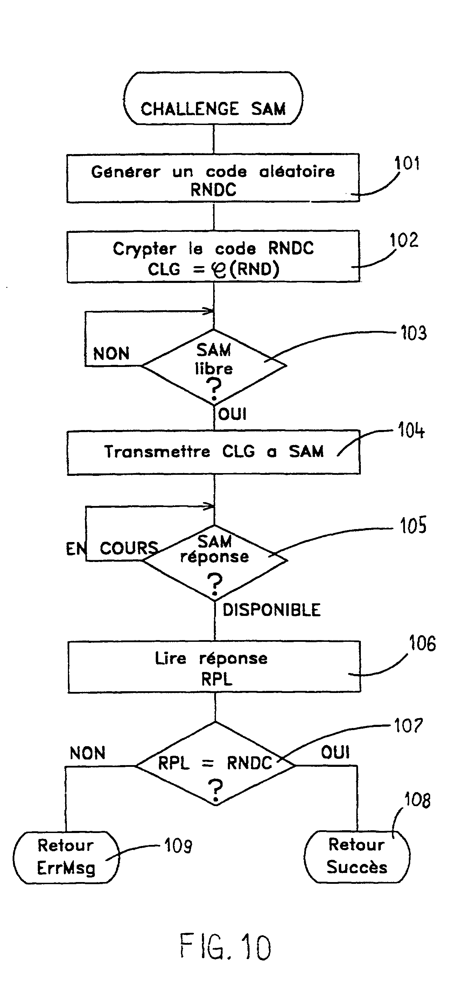

On se réfère maintenant aux figures 10 et suivantes sur lesquelles on a illustré d'autres aspects de l'invention.

Le périphérique comporte une application de sécurité, désignée par SAM dans la suite du texte. Par application de sécurité ou SAM, on entend un objet logiciel comportant un code exécutable et toutes les ressources spécifiques nécessaires à son fonctionnement, résidant et s'exécutant dans la mémoire d'un microcircuit sécurisé muni d'un système d'exploitation sécurisé aussi. Un exemple typique de SAM est le porte-monnaie électronique disponible sur carte à microcircuit. Il est prévu dans le périphérique, pour au moins un logiciel applicatif de l'équipement électronique hôte avec lequel ledit périphérique communique, une application de sécurité installée dans ledit périphérique.

L'applicatif et son application de sécurité connaissant chacun une même information secrète sous la forme d'une ou plusieurs clés, il met en oeuvre un même algorithme cryptographique, permettant la vérification de cette clé.

On dispose ainsi d'une application de sécurité de distribution qui remplace la clé ordinaire de protection du logiciel applicatif contre les fraudes. Cette application de sécurité est avantageusement, mais non limitativement, portée par une carte à puce, désignée par la suite par carte collectrice SAMC. Cette carte collectrice est par exemple chargée à partir d'une deuxième carte appelée carte de distribution ou SAMD, qui est par exemple livrée avec le logiciel applicatif nécessitant une protection contre la fraude. Dans ce contexte, la figure 10 est un organigramme d'une séquence simplifiée d'interrogation d'une application de sécurité SAM résidant dans la carte collectrice d'un appareil périphérique par un applicatif s'exécutant localement ou accédant à l'équipement hôte qui communique avec le périphérique. La SAM a le rôle d'une clé de protection de cet applicatif. La première étape du test de la SAM (étape (101)) consiste à générer un code aléatoire (RNDC) qui est ensuite mémorisé. Dans une deuxième étape (102), ce code (RNDC) est crypté selon un procédé à clé symétrique bien connu dans l'art. Cette clé de cryptage est connue par l'applicatif et par sa SAM. Le résultat de l'étape (102) est un autre code représentant le test (CLG) à transmettre à la SAM. Dans l'étape (103), l'applicatif vérifie si il peut transmettre ce test (CLG) au pilote du dispositif. Dans l'étape (104), le message test (CLG) est transféré à ce pilote qui le transmet selon un protocole étendu du protocole de communication spécifique aux moyens de pointage dudit appareil périphérique à la SAM de destination.

Dans l'étape (105), l'applicatif attend pour un temps prédéfini la réplique de la SAM. La SAM utilise un algorithme pour décrypter le test (CLG). Si la SAM est authentique, la clé de décryptage est la même et retrouve le code aléatoire initial en clair. Sa réplique (RPL) est transmise au pilote du dispositif pour être lue dans l'étape (106) par l'applicatif. L'étape suivante (107) consiste à comparer le code initial (RNDC) avec la réplique (RPL). Si ils sont identiques, il n'y a pas de fraude. Une telle séquence de test de SAM s'intègre dans l'applicatif à protéger. Si la séquence de la figure 10 a un seul message de retour en cas de succès (108), les messages d'erreurs (109) sont plus nombreux dans la pratique et reflètent les situations d'échec possibles dans toutes ses étapes.

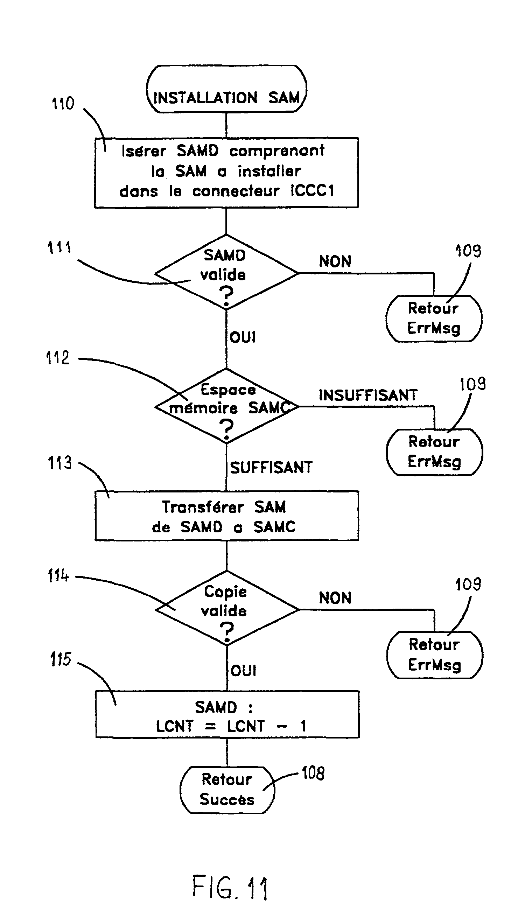

La séquence simplifiée d'installation d'une application de sécurité ou SAM dans le procédé selon l'invention est présentée dans la figure 11.

Une carte SAMD de distribution d'applications de sécurité peut servir pour plusieurs installations d'une même application de sécurité. Ladite carte comporte pour chaque application de sécurité un compteur de licences (LCNT) initialisé au nombre d'installation permise pour ladite application. Le programme d'installation de l'applicatif demande dans l'étape (110) la carte de distribution SAMD dans le coupleur de carte à puce du périphérique. La procédure est interrompue si :
- le test (111) ne reconnaît pas la carte de distribution SAMD ou le compteur du nombre de licences à installer LCNT est nul,
- le test (112) ne trouve pas assez de mémoire dans la carte collectrice SAM ou cette carte ne supporte pas la SAM à installer,
- le test (114) ne valide pas la copie.

Si le conditions (111) et (112) sont réunies, l'étape (113) transfère la SAM de la carte de distribution SAMD à la carte collectrice SAMC.

Le microcontrôleur du coupleur du périphérique déclenche ce transfert qui ensuite se déroule entre les deux cartes selon un quelconque procédé de transfert de données sécurisé.

Pendant ce transfert, Le microcontrôleur agit uniquement comme canal de liaison entre les deux cartes SAMC et SAMD. Le système d'exploitation de la carte collectrice SAMC amène la SAM à sa forme exécutable. Ensuite, la carte SAMC effectue le test (114) qui comprend la validation du transfert proprement-dit et ensuite la vérification du fonctionnement correct de la SAM. Cette vérification consiste à simuler l'interrogation de la SAM et à vérifier son comportement. La carte collectrice SAMC efface de sa mémoire la SAM invalide. L'installation d'une SAM est équivalente à un transfert de valeur selon un mécanisme transactionnel similaire à celui utilisé dans les systèmes porte-monnaie électronique. Ce mécanisme transactionnel assure dans l'étape (115) que le compteur de licences (LCNT) est diminué d'une unité uniquement si la SAM est validée par les moyens sécurisés de stockage, gestion et exécution SAMC.

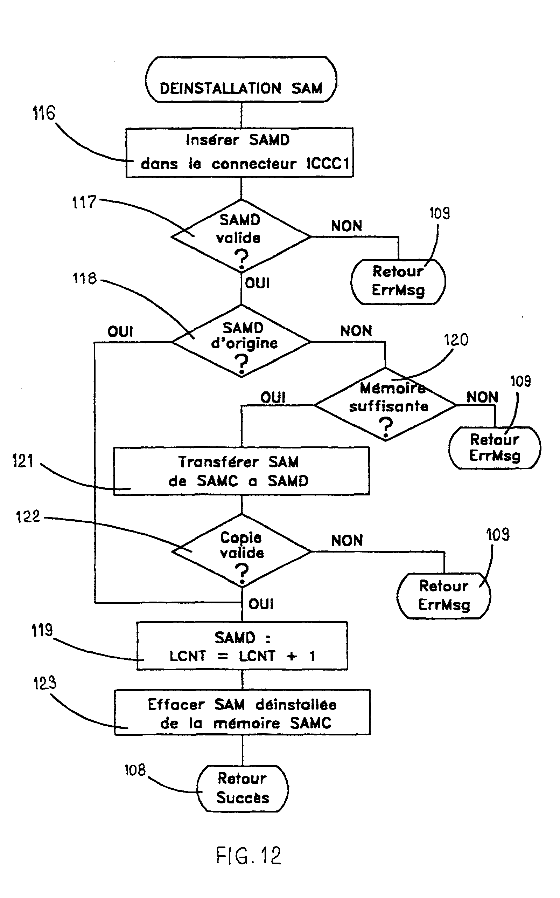

L'organigramme simplifié de désinstallation d'une application SAM dans le procédé selon l'invention est présenté sur la figure 12.

Le programme de désinstallation de l'applicatif protégé par une SAM demande dans l'étape (116) l'insertion de la carte de distribution SAMD ou équivalente dans le coupleur du périphérique. Le test (117) vérifie si la SAM à désinstaller accepte la carte introduite dans ledit coupleur. Si la carte SAMD est la carte d'origine, le code de la SAM y est toujours présent et l'étape (119) augmente d'une unité le compteur de licences (LCNT).

Si la carte SAMD n'est pas celle d'origine, le code de la SAM est transféré de la carte collectrice SAMC dans l'étape (121) à la condition (120) de mémoire suffisante, dans des conditions similaires à l'étape (113) du processus d'installation décrit ci-dessus. Toujours dans l'étape (121), le système d'exploitation de la carte SAMD crée un compteur de licences (LCNT) initialisé à zéro. Dans le cas de transfert de code de SAM, la carte SAMD vérifie dans l'étape (122) la validité de la copie, comme dans l'étape (114) de l'organigramme d'installation de SAM. Par un mécanisme transactionnel comme celui de l'installation d'une SAM, l'opération de désinstallation assure que seulement en cas de succès la carte SAMD comporte une SAM valide et un compteur de licences (LCNT) incrémenté d'une unité et que la carte SAMC efface la SAM en question de sa mémoire dans l'étape (123). Le procédé permet ainsi à toute carte SAMD ayant reçu par désinstallation une application de sécurité d'être équivalente à une carte de distribution d'origine. Une application de sécurité est transférée entre deux cartes distantes qui communiquent entre elles par des moyens interposés assurant le transport et l'intégrité de leurs messages, via des réseaux de communication. Aussi, une procédure de transfert de SAM en tant que licence d'utilisation flottante d'un équipement hôte à un autre en utilisant les réseaux de communications est similaire à la procédure de désinstallation de SAM décrite ci-dessus. Dans ce cas, la carte de distribution est remplacée par la carte collectrice de destination.

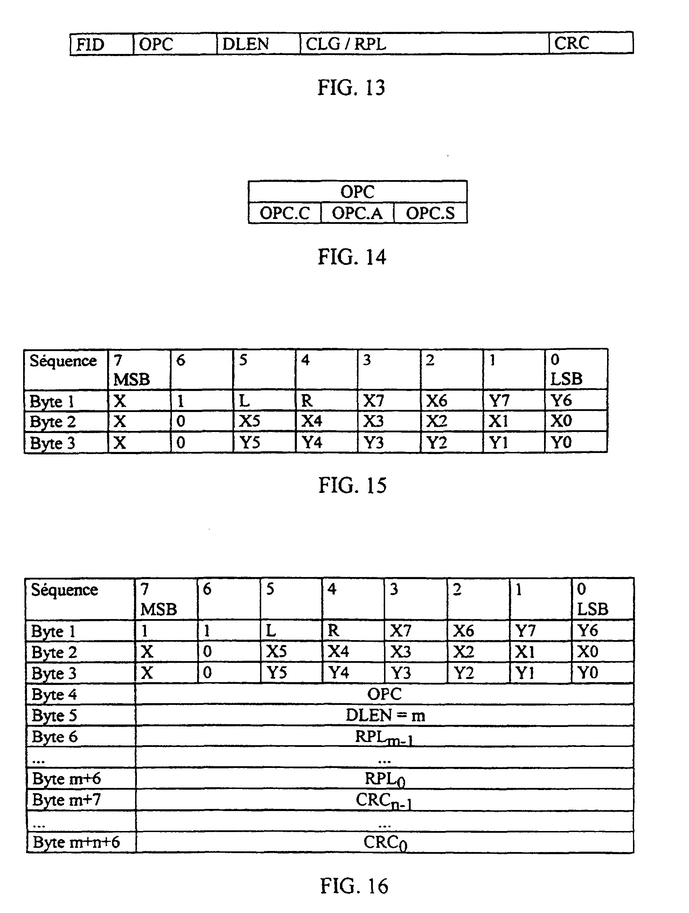

De préférence, le protocole de communication utilisé pour la gestion et l'exécution des applications de sécurité utilise une même voie de communication série pour véhiculer l'information de pointage et les messages de sécurité. Ainsi, la fonction de pointage et la fonction de terminal de carte à microcircuit sont disponibles quasi simultanément et indépendamment l'une de l'autre. Dans le cadre dudit protocole de communication, les informations et les commandes sont transmises sous la forme de trames comprenant un ensemble de champs constitué chacun d'une séquence codée comportant un nombre prédéterminé de bits, comme illustré dans la figure 13. Ainsi, une trame comporte obligatoirement un champ d'identification (FID) et au moins un des champs suivants :
- champ de l'information de pointage,
- champ de l'information relative à une application de sécurité.

Le champ d'identification (FID) initialise les moyens de réception pour l'analyse de son contenu. Pour les périphériques de pointage et un mode de fonctionnement donné, leurs trames ont une longueur fixe. Dans une telle trame, le bit de poids fort est réservé à l'identification de son début. Le protocole mis en oeuvre selon l'invention utilise la même méthode pour préserver la compatibilité avec les dispositifs de pointage classiques et place toujours l'information de pointage en début de trame étendue. Ainsi, il n'est pas restrictif de considérer la trame de pointage comme une part du champ d'identification (FID) de la trame étendue dont la figure 6 en est une illustration. Par exemple, la présence du champ de l'information relative à une application de sécurité peut être indiquée selon le même principe par une valeur particulière d'un groupe de bits du premier octet de la trame. Ainsi, le champ de l'information relative à une application de sécurité comporte tout ou une part des champs suivants dans l'ordre de citation, à partir d'une position déterminée par ladite valeur particulière d'un groupe de bits du champ d'identification (FID) :
- champ de contrôle (OPC),
- champ donnant la longueur du message d'application de sécurité (DLEN),
- champ qui comprend tout ou une part du message d'application de sécurité proprement-dit (CLG) ou (RPL),
- champ de contrôle de l'intégrité dudit message (CRC).
- Les trames étendues ont une longueur variable selon le champ de contrôle (OPC). Si la trame comporte un message (CLG) destiné à une application de sécurité ou un message (RPL) destiné à un applicatif, le champ (OPC) est suivi par un champ (DLEN) donnant la longueur dudit message (CLG) ou (RPL). La longueur du champ (DLEN) est une fonction de la longueur maximale admise pour les messages (CLG) et (RPL). Les moyens de contrôle et traitement du dispositif selon l'invention ignorent la signification desdits messages (CLG) et (RPL). Le champ optionnel (CRC) permet l'éventuel contrôle de l'intégrité desdits messages (CLG) ou (RPL).

Une trame étendue est complètement définie par son champ de contrôle (OPC) qui comprend au moins les informations suivantes (figure 14) :
- le code (OPC.C) de l'opération concernant une ou plusieurs applications de sécurité,
- l'adresse de application de sécurité concernée par la trame (OPC.A),
- le nombre (OPC.S) d'octets du champ de l'information relative à une application de sécurité transmis par trame étendue, ce nombre (OPC.S) étant au moins égal à la longueur du champ (OPC).

L'adresse (OPC.A) prend aussi en compte le coupleur par lequel on accède à l'application de sécurité. Les messages longs sont transmis par segments de longueur constante (OPC.S) à l'exception d'un dernier segment, reparti sur plusieurs trames étendues plus courtes. Cette méthode permet d'assurer l'uniformité de la fréquence d'acquisition de l'information de pointage.

Les figures 15 à 18 illustrent une implémentation particulière de la structure des trames étendues décrites ci-dessus à l'aide des figures 13 et 14.

La figure 15 présente la trame émise par une souris conventionnelle. Cette trame comporte trois octets, dont les bits de poids fort ne sont pas utilisés. Ces bits sont utilisés pour indiquer les trames étendues.

En partant de cette trame, la figure 16 illustre la structure d'une trame étendue dont le champ d'identification (FID) reprend la trame de pointage et positionne à 1 le bit de poids fort de son premier octet. Ainsi, le pilote du dispositif détecte la trame étendue et analyse le quatrième octet qui correspond au champ de contrôle (OPC) de l'information de sécurité. Le cinquième octet (DLEN = m) indique la longueur en octets de la réplique (RPL) d'une application SAM, seul ou en association avec un autre champ binaire disponible dans les octets précédents, par exemple les bits de poids fort des octets 2 et 3. Le champ de contrôle (CRC) comporte (n) octets.

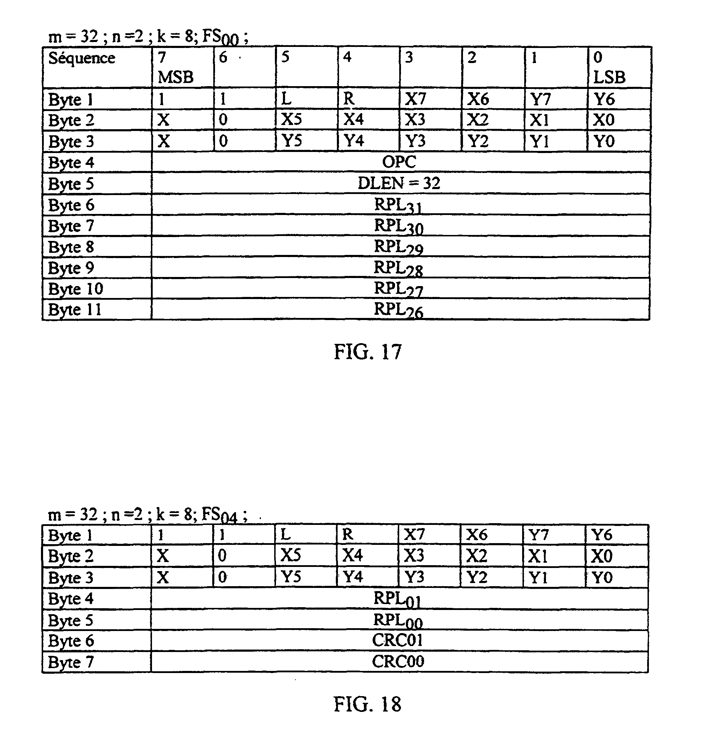

Les figures 17 et 18 illustrent la structure de la première, respectivement la cinquième trame des trames étendues qui transmettent la réplique d'une application de sécurité en plusieurs segments consécutifs pour le paramètre OPC.S = 8, une réplique (RPL) de 32 octets et un (CRC) sur 16 bits. Le champ (OPC.S) indique au driver du dispositif le nombre d'octets du champ de l'information relative à une application de sécurité ajoutés à la trame de pointage, à l'exception d'une dernière trame. Aussi, les trames de pointage et les trames étendues peuvent être alternées.

L'invention est décrite dans ce qui précède à titre d'exemple non limitatif. Il est entendu que l'Homme du métier sera à même de réaliser diverses variantes sans pour autant sortir du cadre de l'invention telle que définie dans les revendications attenantes.

## Revendications

1. Dispositif d'accès conditionnel destiné à être utilisé en liaison avec un équipement électronique hôte, constitué par un périphérique de pointage incorporant au moins un coupleur de carte à microcircuit,
**caractérisé en ce qu'**il incorpore en outre des moyens d'acquisition d'informations personnelles propres à un utilisateur représentatives d'un code confidentiel de l'utilisateur et **en ce que** lesdites informations personnelles sont comparées localement avec les informations mémorisés dans la carte à microcircuit (5) afin de fournir une information d'agrément ou non de l'utilisateur transmise à l'équipement électronique hôte sans que lesdites informations personelles ne transitent par l'équipement électronique hôte.

2. Dispositif d'accès conditionnel selon la revendication 1, **caractérisé en ce que** les moyens d'acquisition d'informations personnelles propres à un utilisateur sont constitués par un clavier pour la saisie d'un code d'identification alphanumérique ou une tablette munie d'une zone sensible pour la saisie d'une information personnelle manuscrite.

3. Dispositif d'accès conditionnel selon la revendication 1 ou 2, **caractérisé en ce que** les moyens de saisie des informations personelles sont constitués par un capteur pour la saisie d'un signal d'identification biométrique, tel qu'un capteur d'image d'empreintes digitales et/ou un capteur d'images de fond de l'oeil et/ou un capteur sonore associé à un moyen de reconnaissance vocale.

4. Dispositif d'accès conditionnel selon l'une quelconque des revendications précédentes, **caractérisé en ce qu'**il comporte un clavier (6) pour la saisie des informations personelles et/ou un moyen d'affichage pour le contrôle de la transaction.

5. Dispositif d'accès conditionnel selon l'une quelconque des revendications précédentes, **caractérisé en ce que** les moyens de saisie des informations personelles sont constitués par un moyens propre à provoquer l'affichage sur l'écran de l'équipement hôte d'un clavier virtuel comportant des représentations graphiques dont la disposition varie aléatoirement à chaque activation desdits moyens, l'acquisition des informations personelles s'effectuant par pointage des représentations graphiques et validation lors du positionnement du pointeur sur la représentation graphique recherchée, le traitement des informations de pointage et de validation sur l'écran virtuel étant réalisé dans le dispositif d'accès conditionnel exclusivement.

6. Dispositif d'accès conditionnel selon l'une quelconque des revendications précédentes **caractérisé en ce que** les moyens d'acquisition des informations personnelles sont constitués par un module d'acquisition et de numérisation de la voix de l'utilisateur.

7. Dispositif d'accès conditionnel selon l'une quelconque des revendications précédentes, **caractérisé en ce qu'**il comporte des moyens de synthèse vocale et de reproduction sonore pour le contrôle de la transaction.

8. Dispositif d'accès conditionnel selon l'une quelconque des revendications précédentes, **caractérisé en ce que** le moyen d'acquisition des informations personnelles est constitué par une zone tactile de pointage (11) comportant une représentation du clavier superposée à sa surface tactile.

9. Dispositif d'accès conditionnel selon l'une quelconque des revendications précédentes **caractérisé en ce qu'**il comporte une horloge à fonctionnement permanent et des moyens pour transmettre à l'équipement périphérique des données numériques datées comportant une séquence de données relative à l'autorisation calculée à partir des données mémorisées dans la carte à microcircuit (5) et des données saisies par l'utilisateur et une séquence de données délivrée par l'horloge.

10. Dispositif d'accès conditionnel selon l'une quelconque des revendications précédentes **caractérisé en ce qu'**il comporte les moyens lui permettant d'exécuter en coopération avec un équipement hôte, sur les réseaux en-ligne, toutes ou partie des transactions sécurisées suivantes impliquant une carte porte-monnaie électronique ou une carte bancaire : a) payement, b) remboursement, c) annulation de l'opération, d) sélection de devise,
et/ou toutes ou partie des transactions sécurisées suivantes impliquant la carte porte-monnaie électronique y insérée : e) chargement d'une carte porte-monnaie électronique à partir d'un compte bancaire, f) transfert de valeur d'une carte porte-monnaie électronique à un compte bancaire, g) transfert de valeur d'une carte porte-monnaie électronique à une autre carte porte-monnaie électronique, h) débiter la carte porte-monnaie électronique et créditer une carte bancaire.

11. Dispositif d'accès conditionnel selon l'une quelconque des revendications précédentes **caractérisé en ce qu'**il comporte les moyens lui permettant d'exécuter indépendamment et/ou en coopération avec un équipement hôte, toutes ou partie des opérations suivantes impliquant la carte porte-monnaie électronique qui y est insérée : a) vérification de la valeur actuelle ou la balance, b) lecture de la liste des transactions récentes ou journal, c) verrouillage de la carte porte-monnaie électronique, d) changement de code d'identification.

12. Dispositif d'accès conditionnel selon l'une quelconque des revendications précédentes **caractérisé en ce qu'**il comporte les moyens pour effectuer des transactions entre les applications financières résidentes sur une même carte à microcircuit.

13. Dispositif d'accès conditionnel selon l'une quelconque des revendications précédentes **caractérisé en ce qu'**il comporte les moyens comprenant une application porte-monnaie électronique et les moyens lui permettant d'exécuter toutes ou partie des opérations suivantes entre cartes successivement insérées dans un même connecteur : a) transfert de valeur d'une carte porte-monnaie électronique à une autre carte porte-monnaie électronique, b) transfert de valeur d'une carte porte-monnaie électronique à l'appareil même, c) débiter ou créditer une carte porte-monnaie électronique et créditer ou débiter de la même valeur une carte bancaire, d) annulation de l'opération.

14. Dispositif d'accès conditionnel selon l'une quelconque des revendications précédentes **caractérisé en ce que** lesdits moyens comprenant l'application porte-monnaie électronique sont compris dans une carte à microcircuit (5) amovible.

15. Dispositif d'accès conditionnel selon l'une quelconque des revendications précédentes **caractérisé en ce qu'**il comporte en outre une surface active de numérisation à stylet et/ou tactile, et un afficheur, la surface active et l'afficheur étant superposés.

16. Procédé de sécurisation de l'accès à un équipement hôte, utilisant et mettant en oeuvre un dispositif d'accès conditionnel conforme à l'une au moins des revendications précédentes **caractérisé en ce que** certaines des fonctions au moins dudit équipement hôte ne sont accessibles qu'après saisie par l'utilisateur d'une information personnelle conforme à une information enregistrée dans une carte à microcircuit et la vérification de la conformité entre l'information personnelle et l'information enregistrée dans la carte à microcircuit est réalisée dans un périphérique comportant un lecteur de carte à microcircuit relié à l'équipement hôte sans que l'information personnelle ne transite par l'équipement hôte.

17. Procédé de transactions informatiques sécurisées comportant une étape de comparaison entre une information personnelle de l'utilisateur et des données contenues dans une carte à microcircuit, utilisant et mettant en oeuvre un dispositif d'accès conditionnel conforme à l'une au moins des revendications 1 à 15 **caractérisé en ce que** l'étape de contrôle est effectuée dans ledit dispositif d'accès conditionnel formant une barrière à la fraude informatique.

18. Procédé pour la gestion et l'exécution des applications de sécurité au sein d'un équipement électronique interactif muni d'un appareil périphérique pour la commande d'objets visuels d'une interface utilisateur graphique selon un protocole de communication **caractérisé en ce que** le protocole de communication comporte une extension pour les applications de sécurité et **en ce que** le procédé comporte une étape de traitement local d'identification de l'utilisateur par un code personnel saisi exclusivement avec des moyens dudit périphérique, dans le périphérique, et des applications de sécurité exploitant des données personnelles enregistrées dans une carte à microcircuit introduite dans un coupleur implanté dans le périphérique, sans que ce code transite par ledit équipement électronique interactif.

19. Procédé selon l'une quelconque des revendications 16 à 18, **caractérisé en ce que** les informations et les commandes sont transmises dans le cadre dudit protocole de communication sous la forme de trames comprenant un ensemble de champs constitué chacun d'une séquence codée comportant un nombre prédéterminé de bits, chaque trame comprenant un champ d'identification (FID) et au moins un des champs suivants :
- champ de l'information de pointage,
- champ de l'information relative aux moyens sécurisés.

20. Procédé selon la revendication 19, **caractérisé en ce que** le champ de l'information relative aux moyens sécurisés comporte tous ou une part des champs suivants dans l'ordre de citation :
- champ de contrôle (OPC),
- champ donnant la longueur du message d'application de sécurité (DLEN),
- champ qui comprend tout ou une part du message d'application de sécurité proprement dit (CLG) ou (RPL),
- champ de contrôle de l'intégrité dudit message (CRC).

21. Procédé selon la revendication 20, **caractérisé en ce que** le champ de contrôle (OPC) comprend au moins les informations suivantes :
- le code (OPC.C) de l'opération concernant une ou plusieurs applications de sécurité,
- l'adresse de l'application de sécurité concernée par la trame (OPC.A),
- le nombre (OPC.S) d'octets du champ de l'information relative à une application de sécurité transmis par trame étendue, ce nombre (OPC.S) étant au moins égal à la longueur du champ (OPC).

22. Procédé selon les revendications 16 à 21 **caractérisé en ce que** l'application de distribution des applications de sécurité (30) comporte un compteur de licences (LCNT) pour le contrôle des transferts multiples d'une même application de sécurité dans la limite d'un nombre prédéfini d'installations ou licences.

23. Procédé selon les revendications 18 et 22 **caractérisé en ce que** l'opération de transfert d'application de sécurité entre des moyens sécurisés locaux ou distants comporte toutes ou une part des étapes suivantes :
- identification de l'initiateur du transfert,
- authentification réciproque des moyens sécurisés participants,
- copie sécurisée du code de l'application sur les moyens de destination,
- validation de la copie,
- invalidation de l'application de sécurité dans les moyens source.

24. Procédé selon la revendication 23 **caractérisé en ce que** l'étape d'identification de l'initiateur du transfert consiste **en ce qu'**une application de sécurité installée dans un desdits moyens sécurisés de stockage, gestion et exécution des applications de sécurité (27) ou l'application de distribution des applications de sécurité (30), identifie l'initiateur du transfert par un code personnel saisi exclusivement avec les moyens dudit périphérique et sans que ce code transite par ledit équipement électronique interactif.

25. Procédé selon la revendication 24 **caractérisé en ce que** l'étape d'invalidation de l'application de sécurité dans les moyens source consiste dans l'effacement de son code et la libération de ses ressources à l'exception de l'application de distribution des applications de sécurité (30) dont seul le compteur de transferts (LCNT) est décrémenté d'une unité.

26. Procédé selon l'une quelconque des revendications 16 à 25 **caractérisé en ce que** le driver du dispositif périphérique, fournit l'information de pointage à un logiciel applicatif et en même temps assure la transmission des messages vers le même ou un autre logiciel applicatif simultanément actif et son application de sécurité.

27. Procédé de sécurisation de l'accès à un équipement hôte selon la revendication 16 **caractérisé en ce que** l'équipement hôte transmet au dispositif d'accès conditionnel des informations relatives à la transaction en cours, que ces informations sont traduites par synthèse vocale, et que la validation de la transaction soit réalisée par la prononciation orale d'un mot ou d'une locution prédéterminée par le titulaire de la carte à microcircuit introduite dans le dispositif.

## Claims

1. A conditional access device intended to be used in connection with a host piece of electronic equipment, formed by a pointing peripheral including at least one microcircuit card coupler,
**characterized in that** it further includes means for acquiring personal informative data specific to a user, representative of a confidential code of the user and **in that** said personal informative data are locally compared with informative data stored in the microcircuit card (5) in order to provide an authorization informative datum of the user or not, transmitted to the host piece of electronic equipment without having said personal informative data pass through the host piece of electronic equipment.

2. The conditional access device according to claim 1, **characterized in that** the means for acquiring personal informative data specific to a user consist of a keyboard for entering an alphanumerical identification code or a tablet provided with a sensitive area for entering a handwritten personal informative datum.

3. The conditional access device according to claim 1 or 2, **characterized in that** the means for entering personal informative data consist of a sensor for entering a biometric identification signal, such as a fingerprint image sensor and/or an eye interior image sensor and/or a sound sensor associated with a voice recognition means.

4. The conditional access device according to any of the preceding claims, **characterized in that** it includes a keyboard (6) for entering personal informative data and/or a display means for monitoring the transaction.

5. The conditional access device according to any of the preceding claims, **characterized in that** the means for entering personal informative data consist of means able to cause display of a virtual keyboard on the screen of the host equipment, including graphical representations, the layout of which randomly changes at each activation of said means, wherein acquisition of personal informative data is carried out by pointing at graphical representations and validating them upon positioning the pointer on the sought-after graphical representation, the processing of pointing at the informative data and their validation on the virtual screen is exclusively performed in the conditional access device.

6. The conditional access device according to any of the preceding claims, **characterized in that** the means for acquiring personal informative data consist of a module for acquiring and digitizing the voice of the user.

7. The conditional access device according to any of the preceding claims, **characterized in that** it includes voice synthesis and sound reproduction means for monitoring the transaction.

8. The conditional access device according to any of the preceding claims, **characterized in that** the means for acquiring personal informative data consists of a touch area (11) to be pointed at, including a representation of the keyboard superimposed on its touch surface.

9. The conditional access device according to any of the preceding claims, **characterized in that** it includes a permanently operating clock and means for transmitting to the peripheral piece of equipment, dated digital data including a data sequence relating to the authorization computed from data stored in the microcircuit card (5) and from data entered by the user and a data sequence delivered by the clock.

10. The conditional access device according to any of the preceding claims, **characterized in that** it includes means allowing it to execute in cooperation with a host piece of equipment over online networks, all or part of the following security transactions involving an electronic purse card or a bank card: a) payment, b) refund, c) cancellation of the operation, d) currency selection,
and/or all or part of the following security transactions involving the electronic purse card which is inserted therein: e) loading of an electronic purse card from a bank account, f) transfer of value from an electronic purse card to a bank card , g) transfer of value from an electronic purse card to another electronic purse card, h) debit from an electronic purse card and credit to a bank card.

11. The conditional access device according to any of the preceding claims, **characterized in that** it includes means allowing it to execute independently and/or cooperatively with a host piece of equipment, all or part of the following operations involving the electronic purse card which is inserted therein: a) checking the current value or balance, b) reading out the list of recent transactions or the log, c) locking the electronic purse card, d) changing the identification code.

12. The conditional access device according to any of the preceding claims, **characterized in that** it includes means for performing transactions between resident financial applications on a same microcircuit card.

13. The conditional access device according to any of the preceding claims, **characterized in that** it includes means comprising an electronic purse application and means allowing it to execute all or part of the following operations between cards successively inserted into a same connector: a) transfer of value from an electronic purse card to another electronic purse card, b) transfer of value from an electronic purse card to the apparatus itself, c) debit from or credit to an electronic purse card and credit to or debit from a bank card of the same value, d) cancellation of the operation.

14. The conditional access device according to any of the preceding claims, **characterized in that** said means comprising the electronic purse application are comprised within a removable microcircuit card (5).

15. The conditional access device according to any of the preceding claims, **characterized in that** it includes in addition a stylus and/or touch digitization active surface and a display device, wherein the active surface and display device are superimposed.

16. A method for providing security to gain access to a host piece of equipment, using and implementing a conditional access device according to at least one of the preceding claims, **characterized in that** at least certain functions of said host equipment are only accessible after the user has entered a personal informative datum complying with a stored informative datum in a microcircuit card and checking of the compliance between the personal informative datum and the informative datum stored in the microcircuit card is performed in a peripheral including a microcircuit card reader connected to the host piece of equipment without having the personal informative datum pass through the host piece of equipment.

17. A method for secure computer transactions including a step for comparing a personal informative datum of the user with data contained in a microcircuit card, using and implementing a conditional access device according to at least one of claims 1 to 15, **characterized in that** the checking step is performed in said conditional access device forming a barrier to computer fraud.

18. A method for managing and executing security applications within a piece of interactive electronic equipment provided with a peripheral apparatus for controlling visual objects of a graphical user interface according to a communications protocol, **characterized in that** the communications protocol includes an extension for security applications and **in that** the method includes a local processing step for identifying the user by a personal code exclusively entered with the means of said peripheral into the peripheral, and security applications utilizing personal data recorded in a microcircuit card introduced into a coupler implanted in the peripheral, without having this code pass through said piece of interactive electronic equipment.

19. The method according to any of claims 16 to 18, **characterized in that** information and controls are transmitted within the framework of said communications protocol as frames comprising a set of fields each formed of a coded sequence including a predetermined number of bits, wherein each frame comprises an identification field (FID) and at least one of the following fields:
- a field for pointing information,
- a field for information relating to the secure means.

20. The method according to claim 19, **characterized in that** the information field relating to the secured means includes all or part of the following fields in the cited order:
- a check field (OPC),
- a field giving the length of the security application message (DLEN),
- a field which comprises all or part of the strictly speaking security application message, (CLG) or (RPL),
- a field for checking the integrity of said message (CRC).

21. The method according to claim 20, **characterized in that** the check field (OPC) comprises at least the following informative data:
- the code (OPC.C) of the operation relating to one or more security applications,
- the address of the security application affected by the frame (OPC.A),
- the number of bits (OPC.S) of the informative data field relating to a security application transmitted with an extended frame, wherein this number (OPC.S) is at least equal to the length of the field (OPC).

22. The method according to claims 16, **characterized in that** the application for distributing security applications (30) includes a license counter (LCNT) for checking multiple transfers of a same security application within the limit of a predefined number of installations or licenses.

23. The method according to claims 18 and 22, **characterized in that** the operation for transferring a security application between the local or remote secure means includes all or part of the following steps:
- mutual authentication of the participating secure means,
- secure copy of the application code on the destination means,
- validation of the copy,
- invalidation of the security application in the source means.

24. The method according to claim 23, **characterized in that** the step for identifying the initiator of the transfer consists **in that** a security application installed on one of said secured means for storing, managing, and executing security applications (27) or the application for distributing the security applications (30), identifies the initiator of the transfer by a personal code exclusively entered with the means of said peripheral and without having this code pass through said piece of interactive electronic equipment.

25. The method according to claim 24, **characterized in that** the step for invalidating the security application in the source means consists in deleting its code and releasing its resources except for the application for distributing the security applications (30), the transfer counter (LCNT) of which alone is decremented by one unit.

26. The method according to any of claims 16 to 25, **characterized in that** the driver of the peripheral device provides the information for pointing to application software and at the same time provides transmission of messages to the same or to another application software simultaneously active and its security application.

27. The method for providing security to access to a host piece of equipment according to claim 16, **characterized in that** the host piece of equipment transmits to the conditional access device informative data relating to the current transaction, **in that** these informative data are translated by voice synthesis and that the validation of the transaction is performed by the oral pronunciation of a word or a predetermined phrase by the owner of the microcircuit card introduced into the device.

## Patentansprüche

1. Vorrichtung für bedingten Zugriff, bestimmt zur Verwendung in Verbindung mit einer elektronischen Hostanlage, bestehend aus einem Peripheriegerät zur Dateneingabe durch Betätigung von Tasten mit mindestens einem Anschluss für Karte mit Mikroschaltung,
**dadurch gekennzeichnet, dass** sie außerdem die für Benutzer geeigneten Datenerfassungsmittel für die typischen persönlichen Informationen eines vertraulichen Benutzercodes enthält, und dadurch, dass die genannten persönlichen Informationen lokal mit den in der Karte mit Mikroschaltung (5) gespeicherten Informationen verglichen werden, damit eine Information, welche an die elektronische Hostanlage weitergeleitet wird, ohne dass die genannten persönlichen Informationen in die elektronische Hostanlage gelangen, den Zugriff des Benutzers freigibt oder ablehnt.

2. Vorrichtung für bedingten Zugriff nach Anspruch 1, **dadurch gekennzeichnet, dass** die für einen Benutzer geeigneten Datenerfassungsmittel für persönliche Informationen aus einer Tastatur für die Eingabe eines digitalen Identifikationscodes bestehen oder aus einem Bildschirm mit einer sensiblen Zone für die Eingabe einer persönlichen Information von Hand.

3. Vorrichtung für bedingten Zugriff nach Anspruch 1 oder 2, **dadurch gekennzeichnet, dass** die Datenerfassungsmittel für die persönlichen Informationen aus einem Sensor für die Erfassung eines biometrischen Identifikationssignals bestehen, wie zum Beispiel ein Bildsensor für Fingerabdrücke und/oder ein Bildsensor für den Augenhintergrund und/oder ein akustischer Sensor verbunden mit einer Einrichtung zur Stimmerkennung.

4. Vorrichtung für bedingten Zugriff nach einem der vorgenannten Ansprüche, **dadurch gekennzeichnet, dass** sie eine Tastatur (6) zur Eingabe der persönlichen Informationen und/oder ein Displaymittel für die Kontrolle der Transaktion umfasst.

5. Vorrichtung für bedingten Zugriff nach einem der vorgenannten Ansprüche, **dadurch gekennzeichnet, dass** die Datenerfassungsmittel für die persönlichen Informationen in einem Mittel bestehen, das geeignet ist, die Anzeige auf dem Bildschirm der Hostanlage mit einer virtuellen Tastatur mit grafischen Zeichen zu bewirken, deren Anordnung zufallsbedingt bei jeder Aktivierung des genannten Mittels variiert, dass die Eingabe der persönlichen Informationen durch die Betätigung der Tasten mit grafischen Zeichen und durch Bestätigung der Cursorposition auf dem gewünschten grafischen Zeichen erfolgt, und dass die Verarbeitung der Eingabe- und Bestätigungsinformationen auf dem virtuellen Bildschirm ausschließlich in der Vorrichtung für bedingten Zugriff vorgenommen wird.

6. Vorrichtung für bedingten Zugriff nach einem der vorgenannten Ansprüche, **dadurch gekennzeichnet, dass** das Datenerfassungsmittel für die persönlichen Informationen aus einem Dateneingabemodul und der Digitalisierung der Benutzerstimme bestehen.

7. Vorrichtung für bedingten Zugriff nach einem der vorgenannten Ansprüche, **dadurch gekennzeichnet, dass** sie Mittel zur Stimmsynthese und akustischen Reproduktion für die Kontrolle des Vorgangs enthält.

8. Vorrichtung für bedingten Zugriff nach einem der vorgenannten Ansprüche, **dadurch gekennzeichnet, dass** die Datenerfassungsmittel für die persönlichen Informationen in einer Touch-Screen-Fläche zur Eingabe (11) besteht, wobei auf der Berührungsfläche die Darstellung der Tastatur erscheint.

9. Vorrichtung für bedingten Zugriff nach einem der vorgenannten Ansprüche, **dadurch gekennzeichnet, dass** sie eine ständig funktionierende Zeituhr aufweist und Mittel, um an das Peripheriegerät digitale Daten mit Datumsangabe zu übermitteln, die eine Datensequenz in bezug auf die Autorisierung enthalten, die anhand der in der Karte mit Mikroschaltung (5) gespeicherten Daten und der durch den Benutzer eingegebenen Daten errechnet wurde, sowie eine von der Uhr generierte Datensequenz.

10. Vorrichtung für bedingten Zugriff nach einem der vorgenannten Ansprüche, **dadurch gekennzeichnet, dass** sie Mittel umfasst, mit deren Hilfe zusammen mit einer Hostanlage auf Online-Netzen alle oder Teile der nachstehenden gesicherten Transaktionen ausgeführt werden können, wobei eine elektronische Geldkarte oder eine Kreditkarte verwendet wird: a) Auszahlung, b) Rückzahlung, c) Annullierung des Vorgangs, d)Auswahl der Währung,
und/oder alle oder Teile der folgenden, gesicherten Transaktionen unter Verwendung einer eingegeben elektronische Geldkarte: e) Laden einer elektronischen Geldkarte über ein Bankkonto, f) Übertragung des Guthabens einer elektronischen Geldkarte auf ein Bankkonto, g) Übertragung des Guthabens einer elektronischen Geldkarte auf eine andere elektronische Geldkarte, h) eine elektronische Geldkarte mit einem Betrag belasten und einer Kreditkarte einen Betrag gutschreiben.

11. Vorrichtung für bedingten Zugriff nach einem der vorgenannten Ansprüche, **dadurch gekennzeichnet, dass** sie die Mittel dafür enthält, mit denen sie mit Hilfe der eingegebenen elektronischen Geldkarte alle oder einen Teil der folgenden Vorgänge unabhängig und/oder zusammen mit einer Hostanlage durchführen kann: a) Aktuelles Guthaben oder Saldo überprüfen, b) zuletzt erfolgte Transaktionen oder das Journal lesen, c) Elektronische Geldkarte sperren, d) Identifikationscode ändern.

12. Vorrichtung für bedingten Zugriff nach einem der vorgenannten Ansprüche, **dadurch gekennzeichnet, dass** sie die Mittel enthält, um Transaktionen zwischen den finanziellen Anwendungen durchzuführen, die auf ein und derselben Karte mit Mikroschaltung resident sind.

13. Vorrichtung für bedingten Zugriff nach einem der vorgenannten Ansprüche, **dadurch gekennzeichnet, dass** sie Mittel enthält, zu denen eine elektronische Geldkartenanwendung gehört, und dass diese Mittel es ermöglichen, alle oder einen Teil der folgendenden Vorgänge zwischen Karten auszuführen, die nacheinander in denselben Anschluss gesteckt werden: a) Übertragung des Guthabens einer elektronischen Geldkarte auf eine andere elektronische Geldkarte, b) Übertragung des Guthabens einer elektronischen Geldkarte auf das Gerät selbst, c) einer elektronischen Geldkarte einen Betrag gutschreiben oder sie belasten und denselben Wert einer Kreditkarte gutschreiben oder sie damit belasten, d) Vorgang annullieren.

14. Vorrichtung für bedingten Zugriff nach einem der vorgenannten Ansprüche, **dadurch gekennzeichnet, dass** die genannten Mittel mit der Anwendung für elektronische Geldkarte in einer herausnehmbaren Karte mit Mikroschaltung (5) enthalten sind.

15. Vorrichtung für bedingten Zugriff nach einem der vorgenannten Ansprüche, **dadurch gekennzeichnet, dass** sie außerdem eine wirksame Oberfläche zur Digitalisierung durch Zeiger und/oder Berührung enthält, sowie eine Anzeige, bei der die wirksame Oberfläche und die Anzeige über einander erscheinen.

16. Verfahren der Zugriffssicherung für eine Hostanlage, wobei eine Vorrichtung für bedingten Zugriff nach mindestens einem der vorgenannten Ansprüche benutzt und eingesetzt wird, **dadurch gekennzeichnet, dass** mindestens einige Funktionen der genannten Hostanlage erst nach Eingabe einer persönlichen Information durch den Benutzer zugänglich sind, die einer auf einer Karte mit Mikroschaltung gespeicherten Information entsprechen, und dass die Prüfung auf Übereinstimmung der persönlichen Information mit der auf der Karte mit Mikroschaltung gespeicherten Information in einem Peripheriegerät vorgenommen wird, das ein mit der Hostanlage verbundenes Lesegerät für Karten mit Mikroschaltung enthält, ohne dass die persönliche Information auf das Hostgerät weitergeleitet wird.

17. Verfahren für gesicherte Informatik-transaktionen mit einem Vergleichsschritt zwischen einer persönlichen Benutzerinformation und den in der Karte mit Mikroschaltung enthaltenen Daten, wobei eine Vorrichtung für bedingten Zugriff nach mindestens einem der Ansprüche 1 bis 15 benutzt und eingesetzt wird, **dadurch gekennzeichnet, dass** der Prüfschritt in der genannten Vorrichtung für bedingten Zugriff erfolgt und eine Schutzbarriere gegen Informatikmissbrauch bildet.

18. Verfahren für die Administration und Ausführung der Sicherheitsapplikationen in einem interaktiven elektronischen Gerät, das mit einem Peripheriegerät für die Steuerung sichtbarer Objekte eines grafischen Benutzerinterface entsprechend einem Kommunikationsprotokoll versehen ist, **dadurch gekennzeichnet, dass** das Kommunikationsprotokoll eine Verlängerung für die Sicherheitsapplikationen enthält, und dadurch, dass das Verfahren in dem Peripheriegerät einen lokalen Verarbeitungsschritt zur Benutzeridentifikation durch einen persönlichen Code enthält, der ausschließlich mit den genannten Mitteln in das Peripheriemittel eingegeben wird, und Sicherheitsapplikationen, die auf einer Karte mit Mikroschaltung gespeicherte persönliche Daten nutzen, wobei die Karte mit Mikroschaltung in einen in der Peripherie angeordneten Anschluss eingegeben wird, ohne dass dieser Code in die genannte interaktive elektronische Anlage gelangt.

19. Verfahren nach einem der Ansprüche 16 bis 18, **dadurch gekennzeichnet, dass** die Informationen und Befehle im Rahmen des genannten Kommunikations-protokolls in Form von Datenübertragungsblocks (Frames) übermittelt werden, die eine Gruppe von Feldern umfassen, welche jeweils aus einer codierten Sequenz mit einer festegelegten Anzahl von Bits bestehen, wobei jeder Datenübertragungsblock ein Identifikationsfeld (FID) und mindestens eines der folgenden Felder umfasst:
- Feld für die Eingabeinformation
- Feld für die Information über gesicherte Mittel.

20. Verfahren nach Anspruch 19, **dadurch gekennzeichnet, dass** das Feld für die Information über die gesicherten Mittel alle oder einen Teil der folgenden Felder in der genannten Reihenfolge enthält:
- Kontrollfeld (OPC),
- Feld zur Angabe der Nachrichtenlänge der Sicherheitsapplikation (DLEN),
- Feld, das die ganze oder einen Teil der Nachricht der eigentlichen Sicherheitsapplikation enthält (CLG) oder (RPL)
- Feld zur Vollständigkeitskontrolle der genannten Nachricht (CRC)

21. Verfahren nach Anspruch 20, **dadurch gekennzeichnet, dass** das Kontrollfeld (OPC) mindestens die folgenden Informationen enthält:
- den Operationsbefehl (OPC.C)für einen oder mehrere Sicherheitsapplikationen,
- die Adresse für die betreffende Sicherheitsapplikation über den Datenübertragungsblock (OPC.A),
- die Anzahl der Bytes (OPC.S) des Informationsfeldes in bezug auf Sicherheitsapplikation, die über einen erweiterten Datenübertragungsblock (extended frame) übermittelt wird, wobei diese Anzahl (OPC.S) mindestens der Feldlänge (OPC) entspricht.

22. Verfahren nach den Ansprüchen 16 bis 21, **dadurch gekennzeichnet, dass** die Anwendung zur Distribution der Sicherheitsapplikationen (30) einen Lizenzzähler (LCNT) für die Kontrolle der Mehrfachübertragung derselben Sicherheitsapplikation innerhalb der Grenzen einer vordefinierten Anzahl von Installationen oder Lizenzen enthält.

23. Verfahren nach den Ansprüchen 18 bis 22, **dadurch gekennzeichnet, dass** der Übertragungsvorgang der Sicherheitsapplikation zwischen lokalen oder entfernten gesicherten Mitteln alle oder einen Teil der folgenden Schritte enthält:
- Identifizierung des Initiators der Übertragung,
- Gegenseitige Authentifizierung der betreffenden gesicherten Mittel,
- Gesicherte Kopie des Applikationscodes auf die Zieleinrichtung,
- Bestätigung der Kopie,
- Löschen der Sicherheitsapplikation in den Quelleinrichtungen.

24. Verfahren nach Anspruch 23, **dadurch gekennzeichnet, dass** der Identifizierungsschritt des Initiators der Übertragung darin besteht, dass eine Sicherheitsapplikation in einer der genannten gesicherten Mittel für Speicherung, Administration und Ausführung der Sicherheitsapplikationen (27) oder der Distributionsanwendung der Sicherheitsapplikationen (30) den Initiator der Übertragung durch einen persönlichen Code identifiziert, der nur mit den Mitteln des genannten Peripheriegerätes eingegeben wird, und ohne dass der Code in die genannte interaktive, elektronische Anlage gelangt.

25. Verfahren nach Anspruch 24, **dadurch gekennzeichnet, dass** der Schritt der Ungültigmachung der Sicherheitsapplikation in den Quellmitteln darin besteht, dass der Code gelöscht und die Ressourcen freigegeben werden mit Ausnahme der Distributionsanwendung der Sicherheitsapplikationen (30), bei der nur der Übertragungszähler (LCNT) um eine Einheit verringert wird.

26. Verfahren nach einem der Ansprüche 16 bis 25, **dadurch gekennzeichnet, dass** der Treiber des Peripheriegerätes die Eingabeinformation an eine Anwendersoftware weiterleitet und gleichzeitig die Nachrichtenübermittlung an dieselbe oder eine andere gleichzeitig aktive Anwendersoftware und ihre Sicherheitsapplikation sicherstellt.

27. Verfahren für die Zugriffssicherung an einer Hostanlage nach Anspruch 16, **dadurch gekennzeichnet, dass** die Hostanlage an die Vorrichtung für bedingten Zugriff Informationen über die laufende Transaktion übermittelt, dass diese Informationen durch Stimmsynthese übersetzt werden, und dass die Bestätigung der Transaktion durch das Aussprechen eines Wortes oder einer festgelegten verbalen Wendung des Inhabers der in die Vorrichtung eingegebenen Karte mit Mikroschaltung erfolgt.
